# EUROPÄISCHE PATENTSCHRIFT

(11) **EP 0 363 407 B1**
(45) Veröffentlichungstag und Bekanntmachung des Hinweises auf die Patenterteilung: **03.03.1993**
(21) Anmeldenummer: 88904920.1
(22) Anmeldetag: 11.06.1988
(51) Int. Cl.: H04N 9/31

(54) **PROJEKTIONSVORRICHTUNG**
PROJECTOR
DISPOSITIF DE PROJECTION

(30) Priorität: 19.06.1987 DE 3720375
(43) Veröffentlichungstag der Anmeldung: 18.04.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: BAUR, Günter, D-7800 Freiburg (DE); PICKELMANN, Lutz, D-8000 München 80 (DE); SEIBEL, Jörg, D-7813 Grunern (DE)
(74) Vertreter: Rackette, Karl, Dipl.-Phys. Dr.-Ing
(86) Internationale Anmeldenummer: DE8800349
(87) Internationale Veröffentlichungsnummer: WO8810545

(56) Entgegenhaltungen:
- EP-A- 0 083 090
- EP-A- 0 083 440
- US-A- 3 704 934
- US-A- 4 151 554
- SID 86 Digest, vol. XVIII, May 1986, Shinji Morozumi et al.: "LCD full-color video projector", Seiten 375-378.

## Beschreibung

Die Erfindung betrifft eine Projektionsvorrichtung mit einer Lichtquelle und einer Einrichtung zur Erzeugung eines weißen Parallellichtstrahlbündels, mit wenigstens einem zwei dichroitische Farbteilerschichten aufweisenden dichroitischen Prisma, das auf drei seiner Seiten mit drei verschiedenen Farbbildauszügen zugeordneten Flüssigkristall-Lichtventilanordnungen versehen ist, und mit einem Objektiv, durch das die von den Lichtventilanordnungen erzeugten Farbbildauszüge gemeinsam auf eine Leinwand projizierbar sind.

Eine derartige Projektionsvorrichtung zum Projizieren von Farbbildern ohne den Einsatz einer Kathodenstrahlröhre ist in S. Morozumi et al., SID 86 DIGEST (1986), Seite 375 ff beschrieben. Die den Farbbildauszügen zugeordneten Flüssigkristall-Lichtventilanordnungen sind auf drei Stirnseiten eines dichroitischen Prismas angeordnet,wobei an der vierten Stirnseite das Projektionsobjektiv angeordnet ist. Das von der Lichtquelle kommende weiße Parallellichtstrahlbündel wird mit Milfe einer Spiegelanordnung mit zwei dichroitischen Spiegeln so umgelenkt, daß es über die Lichtventilanordnungen in das Innere des dichroitischen Prismas und von dort zum Projektionsobjektiv gelangt.

Ausgehend von diesem Stand der Technik liegt der Erfindung die Aufgabe zugrunde, eine Projektionsvorrichtung zu schaffen, die eine höhere Lichtausbeute und/oder Bildauflösung zu erreichen gestattet.

Diese Aufgabe wird erfindungsgemäß dadurch gelöst, daß zwei dichroitische Prismen jeweils als Farbteilerwürfel mit reflektiv arbeitenden Lichtventilanordnungen vorgesehen sind, die jeweils mit einem der unterschiedlichen Polarisationsrichtungen zugeordneten Ausgänge eines polarisierenden Strahlteilers gekoppelt sind, durch den einerseits das weiße Lichtstrahlbündel auf die beiden Farbteilerwürfel aufteilbar und durch den andererseits das von den Farbteilerwürfeln zurückkehrende Licht der aktivierten Bildpunkte in das Objektiv leitbar ist.

Zweckmäßige Ausgestaltungen und Weiterbildungen der Erfindung sind in den Unteransprüchen gekennzeichnet.

Nachfolgend wird die Erfindung anhand der Zeichnung näher erläutert. Es zeigen:
Fig. 1 eine Projektionsvorrichtung gemäß der Erfindung in einer schematischen perspektivischen Ansicht,
Fig. 2 eine Figur 1 entsprechende Ansicht, in der die dielektrischen Beschichtungen der verschiedenen optischen Bauelemente schraffiert dargestellt sind,
Fig. 3 den Strahlteilerwürfel der erfindungsgemäßen Vorrichtung in einer vergrößerten Darstellung zur Veranschaulichung der verschiedenen Polarisationsrichtungen,
Fig. 4 einen Querschnitt durch eines der Flüssigkristall-Lichtventile der Projektionsvorrichtung,
Fig. 5 eine schematische Draufsicht auf ein Flüssigkristall-Matrixdisplay, das als Lichtventil zum Einsatz kommt,
Fig. 6 den ersten Farbteilerwürfel der Projektionsvorrichtung in einer perspektivischen Ansicht,
Fig. 7 den zweiten Farbteilerwürfel in einer perspektivischen Ansicht zur Veranschaulichung der unterschiedlichen Orientierungen der dichroitischen Farbteilerschichten,
Fig. 8 eine zweite Ausführungsform des Strahlteilerwürfel und
Fig. 9 eine dritte Ausführungsform des Strahlteilerwürfels.

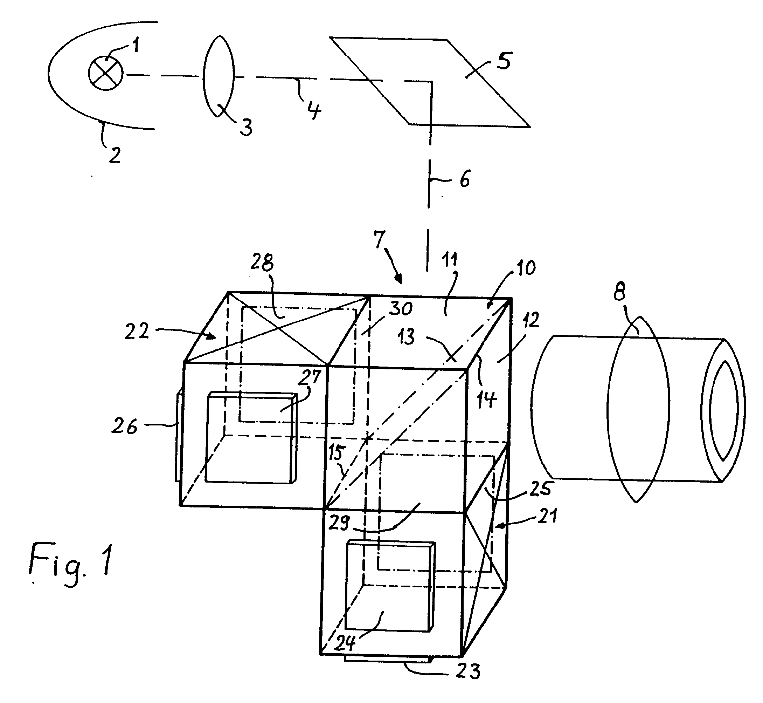

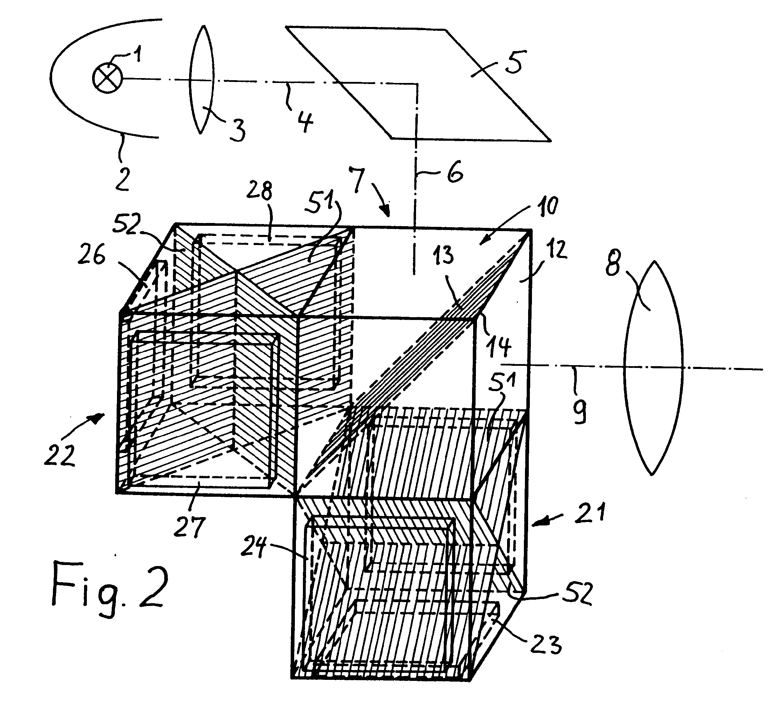

Die in Figur 1 dargestellte elektrooptische Projektionsvorrichtung verfügt über eine weißes Licht liefernde Lichtquelle 1, der ein Reflektor 2 und eine Kollimatorlinse 3 zugeordnet sind, um ein weißes Parallellichtstrahlbündel, das in Figur 1 durch seine Mittellinie 4 schematisch veranschaulicht ist, zu erzeugen. Das Lichtstrahlbündel 4 wird mit Milfe eines Umlenkspiegels 5 umgelenkt. Das umgelenkte Lichtstrahlbündel 6 beaufschlagt eine Lichtventileinheit 7. In der Lichtventileinheit 7 wird entsprechend den zu projezierenden Bildern das weiße Lichtstrahlbündel 6 in der weiter unten näher erörterten Weise in seiner Farbverteilung und Intensitätsverteilung so beeinflußt, daß mit Milfe eines Objektives 8 auf einer in der Zeichnung nicht dargestellten Leinwand ein Projektionsbild erstellt wird. Die Mittelachse des die Lichtventileinheit 7 verlassenden Lichtes ist in Figur 2 mit dem Bezugszeichen 9 versehen.

Die Lichtventileinheit 7 enthält einen polarisierenden Strahlteilerwürfel 10, dessen Oberseite 11 als Lichteinlaß für das Lichtstrahlbündel 6 und dessen in den Figuren 1, 2 und 3 nach rechts weisende Seite 12 als Lichtauslaß dient. Der Strahlteilerwürfel 10 ist ein MacNeille-Prisma, dessen aufgedampfte polarisierende Strahlteilerschicht 13 sich ausgehend von der durch die Oberseite 11 und die Seite 12 gebildeten Kante 14 diagonal in der in den Figuren 1, 2 und 3 dargestellten Weise durch den Strahlteilerwürfel 10 bis zu der der Kante 14 diagonal gegenüberliegenden Kante 15 erstreckt.

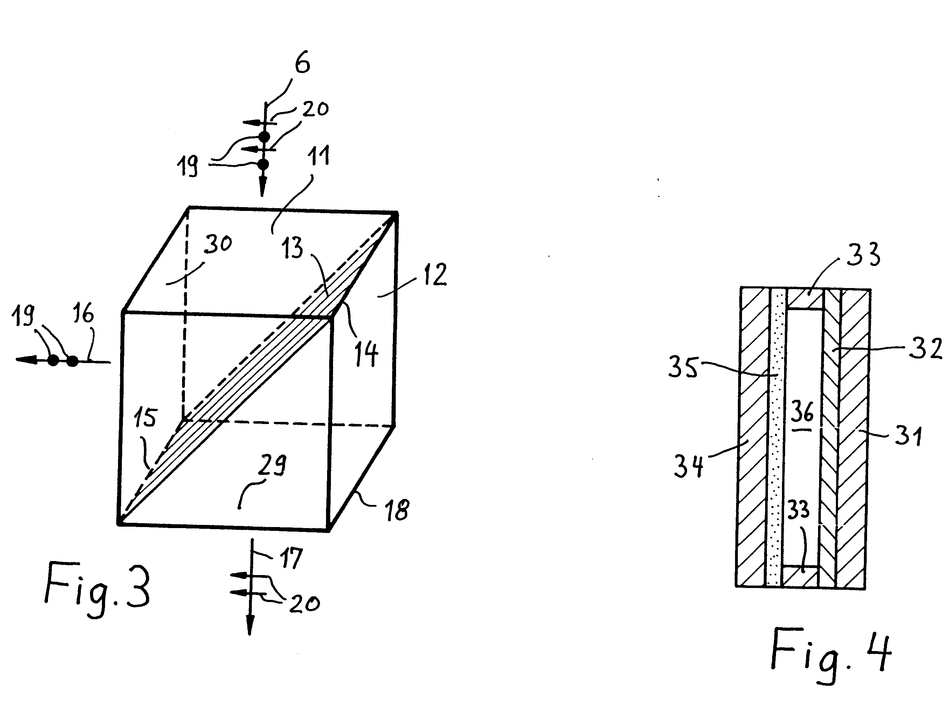

Der polarisierende Strahlteilerwürfel 10, der in Figur 3 gesondert dargestellt ist, besteht aus einem hochbrechenden Glas und teilt das einfallende unpolarisierte Lichtstrahlbündel 6 in zwei Lichtbündel entgegengesetzter Polarisationsrichtung auf, was in Figur 3 schematisch dargestellt ist. Das unpolarisierte Lichtstrahlbündel 6 gelangt über die Oberseite 11 in den Strahlteilerwürfel 10, wobei an der Strahlteilerschicht 13 ein Teil des Lichtes als s-Welle 16 mit einer Polarisationsrichtung rechtwinklig zur Einfallsebene reflektiert wird, während ein anderer Lichtanteil als p-Welle den Strahlteilerwürfel 10 an der der Oberseite 11 gegenüberliegenden Unterseite 18 verläßt. Die Polarisationsrichtungen des Lichtstrahlbündels 6, der s-Welle 16 und der p-Welle 17 sind in Figur 3 jeweils durch Punkte 19 oder durch Pfeile 20 symbolisiert.

Wie man in den Figuren 1 und 2 erkennt, sind dem Strahlteilerwürfel 10 ein erster Farbteilerwürfel 21 und ein zweiter Farbteilerwürfel 22 zugeordnet, in denen das Licht der p-Welle 17 und der s-Welle 16 in Farben zerlegt wird und an reflektiven Flüssigkristall-Lichtventilen 23, 24, 25, 26, 27 und 28, die an unterschiedlichen Stirnflächen der Farbteilerwürfel 21, 22 angebracht sind, entsprechend dem jeweiligen lokalen Reflexionsgrad der Flüssigkristall-Lichtventile reflektiert wird. Das von den Flüssigkristall-Lichtventilen 23 bis 28 reflektierte Licht ist in seinem Polarisationszustand, wie sich aus der nachfolgenden Beschreibung eigibt, entsprechend den einzelnen Bildpunkten des zu projizierenden Bildes in seinem Polarisationszustand verändert, so daß das vom ersten Farbteilerwürfel 21 in die Unterseite 29 des Strahlteilerwürfels 10 eingespeiste speiste Licht aktivierter Bildpunkte an der Strahlteilerschicht 13 in Richtung auf das Objektiv umgelenkt wird, während das vom zweiten Farbteilerwürfel 22 zurückkommende und in die vom Objektiv 8 wegweisende Seite 30 des Strahlteilerwürfels 10 eingespeiste Licht aktivierter Bildpunkte von der Strahlteilerschicht 13 zum Objektiv 8 durchgelassen wird. Das durch die Flüssigkristall-Lichtventile bezüglich des Polarisationszustandes nicht veränderte Licht der nicht aktivierten Bildpunkte gelangt jeweils auf dem gleichen Weg, auf dem es sich zum ersten Farbteilerwürfel 21 bzw. zum zweiten Farbteilerwürfel 22 fortpflanzt, zurück zur Oberseite 11 des Strahlteilerwürfels 10 und von dort zurück in das Beleuchtungssystem der Projektionsvorrichtung.

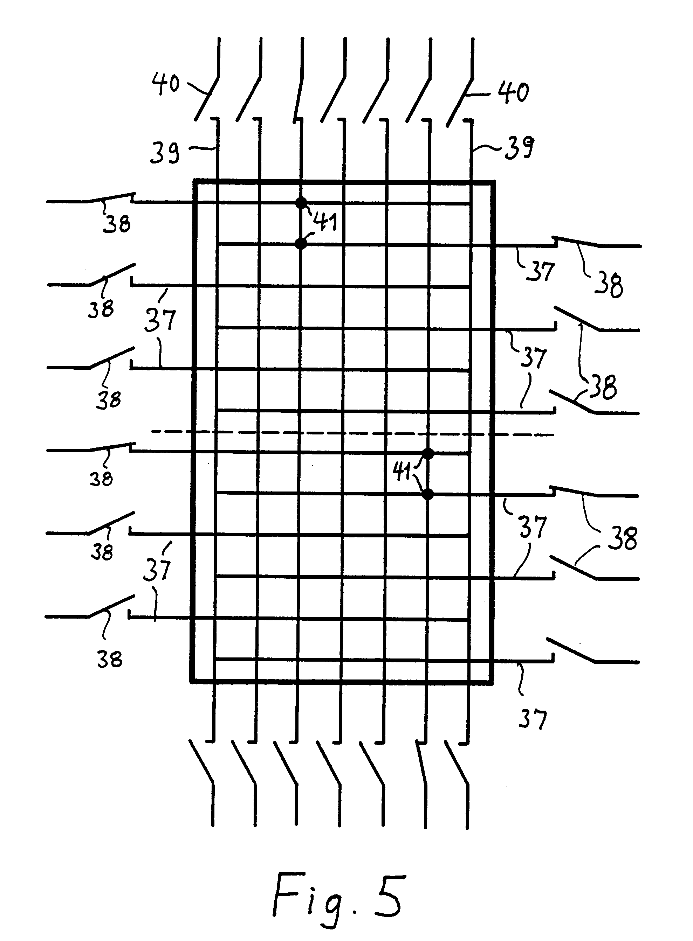

Der Aufbau der reflektiven Flüssigkristall-Lichtventile 23 bis 28 ergibt sich aus den Figuren 4 und 5.

Figur 4 zeigt im Querschnitt und bezüglich der Dicke übertrieben stark dargestellt beispielsweise den Aufbau des Flüssigkristall-Lichtventils 26, dessen vordere Glasplatte 31, die mit dem Farbteilerwürfel 22 gekoppelt ist, auf ihrer Rückseite eine transparente Frontelektrode 32 trägt. Mit Hilfe von Abstandshaltern 33 und einer hinteren Glasplatte 34, die mit einem als Rückelektrode wirksamen Spiegel 35 beschichtet ist, ist ein Aufnahmeraum 36 für ein Flüssigkristall abgegrenzt. Selbstverständlich können die Rückelektrode und der Spiegel auch durch gesonderte Beschichtungen realisiert sein.

Die transparente Frontelektrode 32 und die Rückelektrode 35 sind in der in Figur 5 schematisch dargestellten Weise entsprechend einer Flüssigkristall-Matrixanzeigeeinheit strukturiert. Wie man in Figur 5 erkennt, sind zur Ansteuerung der Bildzeilen eine Vielzahl von Zeilenelektroden 37 mit Zeilenschaltern 38 sowie zur Ansteuerung der Bildspalten eine Vielzahl von Spaltenelektroden 39 mit Spaltenschaltern 40 vorgesehen. Bei der in Figur 5 dargestellten Stellung der Zeilenschalter 38 und Spaltenschalter 40 sind die mit Punkten 41 gekennzeichneten Bildpunkte oder Stellen der Lichtventilmatrix aktiv, so daß die den Punkten 41 zugeordneten Bildpunkte auf dem Projektionsschirm in ihrer Helligkeit und/oder Farbe elektrooptisch gegenüber den übrigen nicht angesteuerten Bildpunkten verändert sind.

Wenn auf eine farbige Bildprojektion verzichtet werden kann, können die Farbteilerwürfel 21 und 22 aus einfachen Glaswürfeln bestehen, die auf den den Seiten 30 und 29 gegenüberliegenden Seiten lediglich die Flüssigkristall-Lichtventile 23 und 26 aufweisen. Bei einer solchen in der Zeichnung nicht dargestellten vereinfachten Ausführungsform gelangt das an der Strahlteilerschicht 13 reflektierte Licht zu dem Flüssigkristall-Lichtventil 26, das an den aktivierten Lichtpunkten entsprechend dem Grad der jeweiligen Ansteuerung eine Drehung der Polarisationsrichtung bewirkt und das bezüglich seiner Polarisationsrichtung modulierte Licht zum Strahlteilerwürfel 10 reflektiert, wo das gegenüber der s-Polarisation in seiner Polarisationsrichtung geänderte Licht sich in Richtung auf das Objektiv 8 fortpflanzt.

Entsprechend gelangt bei der in der Zeichnung nicht dargestellten vereinfachten Ausführungsform das Licht der p-Welle 17 über die Unterseite 29 in einen dem ersten Farbteilerwürfel 21 entsprechenden Glaswürfel, der lediglich mit dem Flüssigkristall-Lichtventil 23 auf der der Unterseite 29 gegenüberliegenden Seite versehen ist. Das Licht der p-Welle wird entsprechend der Ansteuerung der Matrixpunkte in seiner Polarisationsrichtung gegenüber der p-Polarisation verändert, so daß das den aktivierten Bildpunkten entsprechende Licht an der Strahlteilerschicht 13 nicht durchgelassen, sondern in Richtung auf das Objektiv 8 reflektiert wird. Bei einer solchen Anordnung mit zwei Flüssigkristall-Lichtventilen 23, 26 kann die Anordnung der Bildzeilen einerseits so gewählt werden, daß sich die Bildzeilen der beiden Flüssigkristall-Lichtventile 23, 26 überlappen, so daß sich eine Kontrastverbesserung oder Intensitätserhöhung ergibt. Andererseits ist es möglich, die Bildzeilen gegeneinander zu verschieben, so daß die Bildzeile der einen Matrix in die Leerzeile der anderen Matrix zu liegen kommt, wobei sich die Zeilenzahl des projizierten Gesamtbildes gegenüber der angesteuerten Zeilenzahl in den beiden Flüssigkristall-Lichtventilen 23, 26 verdoppelt. Auf diese Weise kann mit Lichtventilen, die eine Auflösung von z.B. 512 Bildzeilen liefern, im projizierten Bild eine Auflösung von 1024 Bildzeilen erreicht werden, wobei das Gesamtbild auch z.B. in seiner oberen Hälfte mit den Lichtventilen 23 bis 25 des ersten Farbteilerwürfels 21 und in seiner unteren Hälfte mit den Lichtventilen 26 bis 28 des zweiten Farbteilerwürfels 22 erstellt wird.

Mit der in den Figuren 1 und 2 dargestellten Projektionsvorrichtung ist es möglich, sechs Bildauszüge zu überlagern, um auf diese Weise farbige Projektionsbilder zu erhalten. Aus diesem Grunde verfügen die Farbteilerwürfel 21, 22 jeweils über drei-Flüssigkristall-Lichtventile 23, 24, 25 bzw. 26, 27, 28.

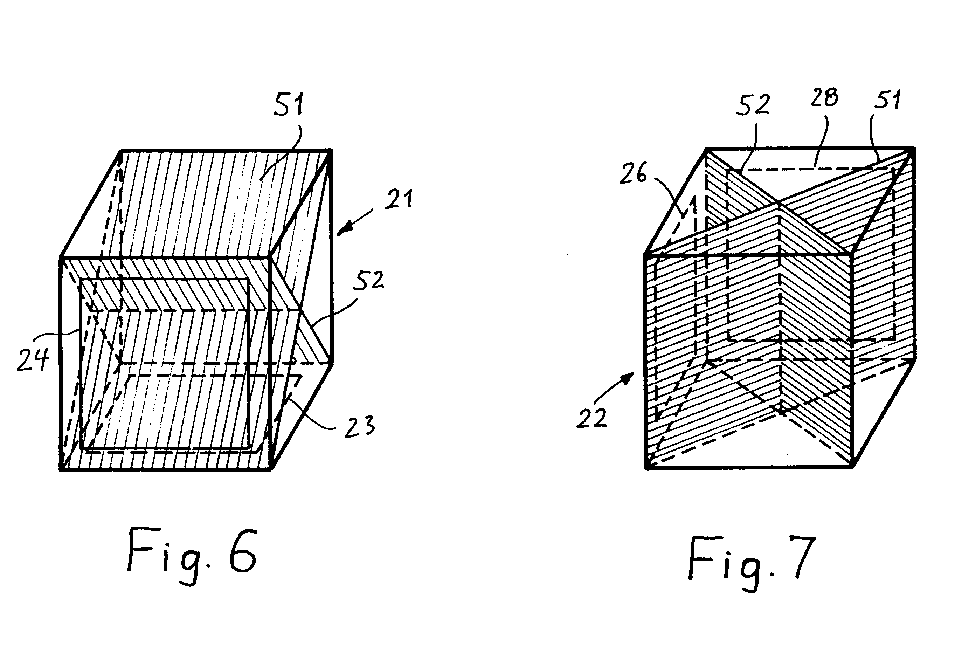

Wie man in den Figuren 1, 2 und 6 erkennt, verfügt der erste Farbteilerwürfel 21 über eine erste dichroitische Farbteilerschicht 51 sowie eine zweite dichroitische Farbteilerschicht 52. Die dichroitische Farbteilerschicht 51 besteht aus einer aufgedampften dielektrischen Schicht, die den blauen Spektralanteil mit einer Wellenlänge von weniger als 490 nm für die p-Welle und 510 nm für die s-Welle in Richtung auf das Flüssigkristall-Lichtventil 24 reflektiert. Die Orientierung der Ebene der dichroitischen Farbteilerschicht 51 verläuft von der oberen Hinterkante zur vorderen Unterkante des ersten Farbteilerwürfels 21.

Für den roten Spektralanteil mit einer Wellenlänge von mehr als 570 nm für die p-Welle und 600 nm für die s-Welle ist die zweite dichroitische Farbteilerschicht 52 vorgesehen, die sich, wie sich aus den Figuren 1, 2 und 6 ergibt, von der oberen Vorderkante zur hinteren Unterkante des ersten Farbteilerwürfels 21 erstreckt. Somit ist das Flüssigkristall-Lichtventil 24 dem Blauauszug, das Flüssigkristall-Lichtventil 25 dem Rotauszug und das Flüssigkristall-Lichtventil 23 dem Grünauszug zugeordnet.

Der Aufbau des zweiten Farbteilerwürfels 22 entspricht demjenigen des ersten Farbteilerwürfels 21, wobei jedoch die Orientierung der Schnittlinie der dichroitischen Farbteilerschichten 51, 52 beim zweiten Farbteilerwürfel 22 in der Zeichnung in Vertikalrichtung und nicht in Horizontalrichtung wie beim ersten Farbteilerwürfel 21 verläuft. Der zweite Farbteilerwürfel 22 ist somit gegenüber dem ersten Farbteilerwürfel 21 um 90° um die Kante 15 verdreht. Die dichroitischen Farbteilerschichten 51, 52 sind zur Verdeutlichung in den Figuren 2, 6 und 7 mit Schraffurlinien versehen, wohingegen die Schraffurlinien in Figur 1 weggelassen wurden, um die Flüssigkristall-Lichtventile 23 bis 28 leichter erkennbar zu machen. Das Glassubstrat der Farbteilerwürfel 21, 22 bildet dabei jeweils die Auflageflächen für die Farbteilerschichten 51, 52 sowie die Flüssigkristall-Lichtventile 23 bis 28.

Die Funktionsweise des zweiten Farbteilerwürfels 22 entspricht derjenigen des ersten Farbteilerwürfels 21, und der Fachmann erkennt, daß das Flüssigkristall-Lichtventil 27 dem Blauauszug, das Flüssigkristall-Lichtventil 28 dem Rotauszug und das Flüssigkristall-Lichtventil 26 dem Grünauszug zugeordnet ist.

Da mit den Flüssigkristall-Lichtventilen 23 bis 28 der Polarisationszustand des auftreffenden Lichtes verändert- wird, ergeben sich nach der Reflexion für die Rekombination des Lichtes etwas verschobene Transmissionskurven der Farbteilerspiegel für die p-Welle bzw. s-Welle.

Unerwünschte Spektralanteile, die aufgrund dieser Kantenverschiebung der Transmissionskurve nicht zur Projektion gelangen, werden durch reflektive dichroitische Farbfilter vor den Lichtventilen in das Beleuchtungssystem zurückreflektiert, da ihr Polarisationszustand nicht verändert wurde. Der Einfallswinkel für die auf die entsprechenden Würfelaußenseiten aufgedampften dichroitischen Farbfilter beträgt 0 Grad.

Den Flüssigkristall-Lichtventilen 23, 24, 26 und 28 sind dichroitische Farbfilter vorgeschaltet, während für die Flüssigkristall-Lichtventile 25 und 27 keine vorgeschalteten Filter benötigt werden.

Das dem Flüssigkristall-Lichtventil 26 zugeordnete Farbfilter reflektiert Licht, dessen Wellenlänge kleiner als 515 nm ist, während das dem Flüssigkristall-Lichtventil 28 zugeordnete Farbfilter Licht mit einer Wellenlänge von weniger als 600 nm reflektiert.

Dem Flüssigkristall-Lichtventil 24 des ersten Farbteilerwürfels 21 ist ein dichroitisches Farbfilter zugeordnet, das Licht mit einer Wellenlänge von mehr als 490 nm reflektiert. Das dem Flüssigkristall-Lichtventil 23 zugeordnete Filter reflektiert Licht mit einer Wellenlänge von mehr als 570 nm.

Aufgrund der oben erörterten Farbteiler und Farbfilterschichten gelangen Spektralanteile zur Projektion, deren blaues Licht im Bereich zwischen 400 und 490 nm, deren grünes Licht im Bereich zwischen 515 und 570 nm und deren rotes Licht im Bereich zwischen 600 und 700 nm liegt.

Wie sich aus dem Vorstehenden ergibt, wirkt der polarisierende Strahlteilerwürfel 10 gleichzeitig als Polarisator und Analysator. Er hat außerdem die Aufgabe, die Teilbilder der einzelnen Lichtventile 23 bis 28 zu überlagern. Das auf der in der Zeichnung nicht dargestellten Leinwand entstehende Bild setzt sich aus der Überlappung von sechs Bildauszügen zusammen. Die Bildauszüge sind so konzipiert, daß bei der Überlagerung von Bildpunkten gleicher Farbe, aber unterschiedlicher Polarisationsrichtung eine Intensitätssteigerung und praktisch eine Verdopplung der mit einzelnen Lichtventilen möglichen Graustufen erzielt werden kann. In einer Anordnung, bei der die Bildzeilen des einen Lichtventils in eine Leerzeile des anderen Lichtventils fallen, kann die Zeilenzahl des Gesamtbildes mit elektronischen Maßnahmen verdoppelt werden.

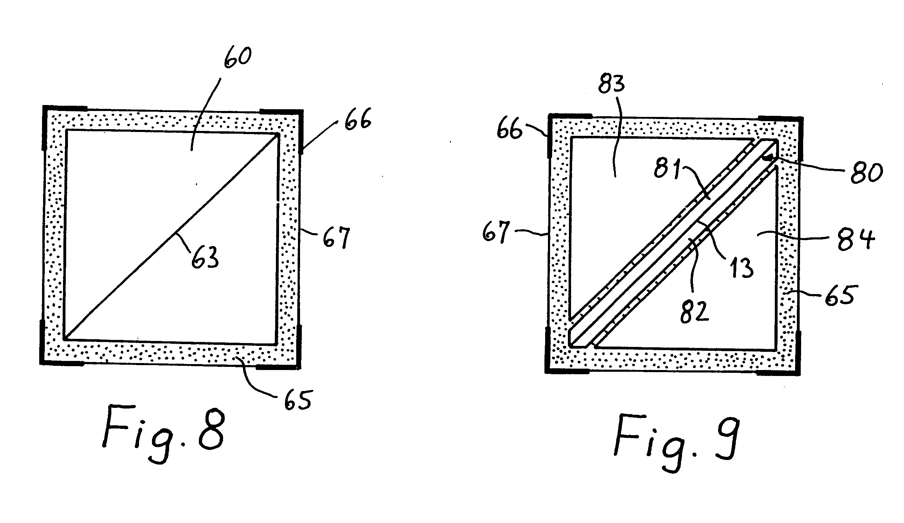

Die Figuren 8 und 9 zeigen spezielle Ausführungsformen zum Ersatz des Strahlteilerwürfels 10, wobei Figur 8 einen Strahlteilerwürfel 60 im Flüssigkeitsbad und Figur 9 eine polarisierende Strahlteilerplatte 80 im Flüssigkeitsbad zeigt.

Ein hoher Bildkontrast kann mit einem polarisierenden Strahlteilerwürfel 10 aus hochbrechenden Materialien mit einem Brechungsindex von etwa 1,62 erzielt werden. Die bei hohen Lichtströmen störende, durch Temperaturgradienten induzierte Spannungsdoppelbrechung kann durch die Verwendung von polarisierenden Platten in Flüssigkeitsküvetten eliminiert werden. Da keine hochbrechenden Flüssigkeiten mit einem Brechungsindex von etwa 1,6 mit ausreichender Transparenz im Wellenlängenbereich zwischen 400 nm und 500 nm zur Verfügung stehen, wird gemäß einer Ausgestaltung der Erfindung der in Figur 8 dargestellte Strahlteiler vorgeschlagen, welcher als Schlüsselbauelement die Realisierung des erfindungsgemäßen Projektionssystems, insbesondere für hohe Lichtströme ermöglicht.

Der in Figur 8 dargestellte Strahlteiler besteht aus einem polarisierenden Strahlteilerwürfel 60 aus hochbrechendem Glas mit einer aufgedampften Schichtenfolge auf der Diagonalfläche. Die aufgedampfte polarisierende Strahlteilerschicht ist in Figur 8 mit dem Bezugszeichen 63 versehen. Der aus hochbrechendem Glas bestehende Strahlteilerwürfel 60 ist in ein Flüssigkeitsbad 65 getaucht. Um Brechungsindexunterschiede zu vermeiden, sind das Glassubstrat (unbehandelte Außenseiten) und die Flüssigkeit bezüglich der Dispersion aufeinander abgestimmt.

Die schmale Flüssigkeitsschicht des Flüssigkeitsbades 65, die den Strahlteilerwürfel 60 umgibt, bewirkt, daß eine gleichmäßige Temperaturverteilung eingehalten werden kann und somit eine individuelle Spannungsdoppelbrechung vermindert wird. Das Flüssigkeitsbad 65 befindet sich in einer Küvette 66, in der mehrere Küvettenfenster 67 vorgesehen sind. Aufgrund des geringen Lichtweges durch die dünne Flüssigkeitsschicht zwischen der Küvettenwand und dem Strahlteilerwürfel 60 ergeben sich nur geringe Absorptionen im Spektralbereich zwischen 400 und 500 nm.

Das Flüssigkeitsreservoir des Flüssigkeitsbades 65 ist mit einem in der Zeichnung nicht dargestellten Puffergefäß verbunden, um bei einer Temperaturerhöhung eine Druckerhöhung zu vermeiden. Die Fenster 67 der Küvette 66 sind bezüglich des Brechungsindexes angepaßt (Außenseite breitbandentspiegelt).

Bei dem in Figur 9 dargestellten Ersatz für den Strahlteilerwürfel 10 wurde das Volumen eines kompakten Glaskörpers, in dem durch Temperaturdifferenzen eine induzierte Spannungsdoppelbrechung auftreten kann, verkleinert, indem das Glassubstrat aufgespalten wird. Die polarisierende Strahlteilerschicht 13 befindet sich bei der in Figur 9 dargestellten Abwandlung zwischen zwei verkitteten Planparallelplatten 81, 82 eines hochbrechenden Glassubstrates. Die Planparallelplatten 81, 82 stehen wie die Strahlteilerschicht 13 in einem Winkel von 45 Grad zum einfallenden Lichtstrahlbündel 6. Durch zwei Keilprismen 83, 84 auf beiden Seiten der Planparallelplatten 81, 82 wird wieder die äußere Form eines Würfels erreicht.

Die beschriebene Anordnung aus den Prismen 83, 84 und den Planparallelplatten 81, 82 befindet sich in einer würfelförmigen Küvette 66. Zwischen den Planparallelplatten 81, 82 und den Keilprismen 83, 84 sowie zwischen den Prismen 83, 84 und den Küvettenfenstern 67 befinden sich jeweils schmale Spaltbereiche, die mit der hochbrechenden Flüssigkeit des Flüssigkeitsbades 65 aufgefüllt sind. Alle Komponenten der in Figur 9 dargestellten Anordnung sind bezüglich des Brechungsindex aufeinander abgestimmt und werden von einer dünnen Flüssigkeitsschicht umspült.

Durch das erweiterte Flüssigkeitsbad ist wiederum eine homogene Temperaturverteilung gewährleistet, so daß eine Spannungsdoppelbrechung innerhalb der Anordnung vermieden ist. Durch die Verwendung der Keilprismen 83, 84 erhält man nur einen geringen Lichtweg durch die hochbrechende Flüssigkeit, was nur geringe Absorptionsverluste im Wellenlängenbereich zwischen 400 und 500 nm zur Folge hat. Um die Volumina der kompakten Glaskörper zu vermindern, sind die Keilprismen 83, 84 aufgeteilt und von einem weiteren Flüssigkeitsspalt durchzogen.

Die oben beschriebene Projektionsvorrichtung ermöglicht die Großbilddarstellung in Farbe und zeichnet sich durch eine hohe Auflösung und hohen Wirkungsgrad bei gleichzeitig kompaktem Aufbau aus. Es werden beide Polarisationsrichtungen des Projektionslichtes ausgenutzt. Dadurch kann mit ein und demselben Hardware-Aufbau entweder die Lichtintensität bei gleichzeitiger Erweiterung des Graustufenumfangs verdoppelt werden oder es ist eine Verdopplung der Bildzeilenzahl möglich, wobei die unterschiedliche Polarisationsrichtung unterschiedlicher aufeinanderfolgender Zeilen auch zur dreidimensionalen Darstellung von Bildern geeignet ist. Die Wahl der jeweiligen Betriebsart erfolgt allein durch entsprechende Ansteuerung der den abzubildenden Bildvorlagen zugeordneten Bildzeilen. Im Zusammenhang mit dem in der Zeichnung dargestellten Ausführungsbeispiel ist eine Anordnung mit LC-Matrixdisplays als Bildvorlage beschrieben. Die Bildzeilen sind in vier Gruppen aufgeteilt, die z.B. im Interlace-Verfahren angesteuert sind. Die darzustellende Bildinformation wird über die Bildspalten eingegeben. Wird die Projektionsvorrichtung zur Erhöhung der Lichtintensität ausgenutzt, so werden jeweils zwei aufeinanderfolgende Bildzeilen gleichzeitig angesteuert, so daß ein und dieselbe Bildinformation durch zwei Pixel dargestellt wird. Die Erhöhung der Lichtintensität wird durch die Überlagerung der Bilder zweier identischer Bildvorlagen erreicht. Damit erweitert sich gleichzeitig auch der Graustufenumfang des projizierten Bildes. Eine Erhöhung der Zeilenzahl kann erreicht werden, wenn nur jede zweite Zeile einer Matrix als Bildzeile angesteuert wird. Die Überlagerung zweier Teilbilder identischer Farbe erfolgt dann im Interlace-Verfahren. Dadurch wird eine Verdopplung der maximal ansteuerbaren Zeilenzahl der Bildvorlagen erreicht. Da das Licht aufeinanderfolgender Zeilen im projizierten Bild unterschiedlich polarisiert ist, eignet sich das Verfahren auch zur dreidimensionalen Darstellung von Bildern, wenn der Betrachter eine Brille trägt, deren Gläser als unterschiedliche Analysatoren ausgebildet sind.

## Patentansprüche

1. Projektionsvorrichtung mit einer Lichtquelle (1) und einer Einrichtung (3) zur Erzeugung eines weißen Parallellichtstrahlbündels, mit wenigstens einem zwei dichroitische Farbteilerschichten (51,52) aufweisenden dichroitischen Prisma, das auf drei seiner Seiten mit drei verschiedenen Farbbildauszügen zugeordneten Flüssigkristall-Lichtventilanordnungen versehen ist, und mit einem Objektives (8), durch das die von den Lichtventilanordnungen erzeugten Farbbildauszüge gemeinsam auf eine Leinwand projizierbar sind, **dadurch gekennzeichnet,** daß zwei dichroitische Prismen jeweils als Farbteilerwürfel (21, 22) mit reflektiv arbeitenden Lichtventilanordnungen (23 bis 28) vorgesehen sind, die jeweils mit einem der unterschiedlichen Polarisationsrichtungen zugeordneten Ausgängen eines polarisierenden Strahlteilers (10, 60, 80) gekoppelt sind, durch den einerseits das weiße Lichtstrahlbündel (6) auf die beiden Farbteilerwürfel (21, 22) aufteilbar und durch den andererseits das von den Farbteilerwürfeln (21, 22) zurückkehrende Licht der aktivierten Bildpunkte (41) in das Objektiv (8) leitbar ist.

2. Vorrichtung nach Anspruch 1, **dadurch** **gekennzeichnet,** daß der Strahlteiler ein MacNeille-Prisma (10) ist.

3. Vorrichtung nach Anspruch 1, **dadurch** **gekennzeichnet,** daß die Lichtventilanordnungen (23 bis 28) auf der von dem Farbteilerwürfel (21, 22) wegweisenden Seite eine reflektierende Schicht (35) aufweisen.

4. Vorrichtung nach Anspruch 1, **dadurch** **gekennzeichnet,** daß zwischen den Lichtventilanordnungen (23 bis 28) und den Farbteilerwürfeln (21, 22) Farbfilter vorgesehen sind.

5. Vorrichtung nach Anspruch 1, **dadurch** **gekennzeichnet,** daß die beiden Farbteilerwürfel (21, 22) gegeneinander um 90 Grad gekippt sind und mit um 90 Grad zueinander orientierten Seiten des Strahlteilers (10, 60, 80) gekoppelt sind.

6. Vorrichtung nach Anspruch 1 oder 2, **dadurch gekennzeichnet,** daß der Strahlteiler (60) in einer mit einer hochbrechenden Flüssigkeit (65) gefüllten Küvette (66) untergebracht ist.

7. Vorrichtung nach Anspruch 1, **dadurch** **gekennzeichnet,** daß als Strahlteiler eine Strahlteilerplatte (81, 82) vorgesehen ist, die sich entlang einer Diagonale in einer Küvette (66) erstreckt, die mit einer hochbrechenden Flüssigkeit (65) gefüllt ist und in der zu beiden Seiten der Strahlteilerplatte (81, 82) hochbrechende Keilprismen (83, 84) vorgesehen sind.

8. Vorrichtung nach Anspruch 1, **dadurch gekennzeichnet,** daß die Projektionen der Bildzeilen aller sechs Lichtventilanordnungen (23 bis 28) einander überdecken.

9. Vorrichtung nach Anspruch 1, **dadurch** **gekennzeichnet,** daß die Projektionen der angesteuerten Bildzeilen (37) der dem ersten Farbteilwürfel (21) zugeordneten Lichtventile (23 bis 25) zwischen den Projektionen der Bildzeilen (37) der dem zweiten Farbteilerwürfel (22) zugeordneten Bildzeilen liegen.

10. Vorrichtung nach Anspruch 9, **dadurch gekennzeichnet,** daß die dem ersten Farbteilerwürfel (21) zugeordneten Lichtventile (23 bis 25) das erste Teilbild und die dem zweiten Farbteilerwürfel (22) zugeordneten Lichtventile (26 bis 28) das zweite Teilbild eines dreidimensionalen Bildes mit Zeilen unterschiedlicher Polarisationsrichtung darstellen.

11. Vorrichtung nach Anspruch 1, **dadurch gekennzeichnet,** daß die Projektionen der angesteuerten Bildzeilen (37) der dem ersten Farbteilerwürfel (21) zugeordneten Lichtventile (23 bis 25) auf den Projektionen der Bildzeilen (37) der dem zweiten Farbteilerwürfel (22) zugeordneten Bildzeilen liegen.

## Claims

1. A projector comprising a light source (1) and a means (3) for producing a parallel beam of white light, at least one dichroic prism which has two dichroic colour-splitting layers (51, 52) and which is provided on three of its sides with liquid crystal light valve arrangements associated with three different colour image components, and a lens (8) through which the colour image components produced by the light valve arrangements can be jointly projected on to a screen, characterised in that there are provided two dichroic prisms each in the form of colour-splitting cubes (21, 22) with light valve arrangements (23 to 28) operating by reflection, which are each coupled to a respective one of the outputs, associated with different polarisation directions, of a polarising beam splitter (10, 60, 80) by which on the one hand the beam of white light (6) can be distributed to the two colour-splitting cubes (21, 22) and by which on the other hand the light of the activated image points (41), returning from the beamsplitting cubes (21, 22), can be directed into the lens (8).

2. A projector according to claim 1 characterised in that the beam splitter is a MacNeille prism (10).

3. A projector according to claim 1 characterised in that the light valve arrangements (23 to 28) have a reflecting layer (35) on the side facing away from the colour-splitting cube (21, 22).

4. A projector according to claim 1 characterised in that colour filters are provided between the light valve arrangements (23 to 28) and the colour-splitting cubes (21, 22).

5. A projector according to claim 1 characterised in that the two colour-splitting cubes (21, 22) are tilted relative to each other through 90° and are coupled to sides of the beam splitter (10, 60, 80) which are oriented through 90° relative to each other.

6. A projector according to claim 1 or claim 2 characterised in that the beam splitter (60) is disposed in a vessel (66) filled with a highly refractive liquid (65).

7. A projector according to claim 1 characterised in that the beam splitter is a beam splitter plate (81, 82) which extends along a diagonal in a vessel (66) which is filled with a highly refractive liquid (65) and in which highly refractive image prism (83, 84) are provided at both sides of the beam splitter plate (81, 82).

8. A projector according to claim 1 characterised in that the projections of the image lines of all six light valve arrangements (23 to 28 ) overlap each other.

9. A projector according to claim 1 characterised in that the projections of the actuated image lines (37) of the light valves (23 to 25) associated with the first colour-splitting cube (21) lie between the projections of the image lines (37) of the image lines associated with the second colour-splitting cube (22).

10. A projector according to claim 9 characterised in that the light valves (23 to 25) associated with the first colour-splitting cube (21) represent the first partial image and the light valves (26 to 28) associated with the second colour- splitting cube (22) represent the second partial image, of a three-dimensional image with lines with different polarisation directions.

11. A projector according to claim 1 characterised in that the projections of the actuated image lines (37) of the light valves (23 to 25) associated with the first colour-splitting cube (21) lie on the projections of the image lines (37) of the image lines associated with the second colour-splitting cube (22).

## Revendications

1. Dispositif de projection, avec une source de lumière (1) et un appareil (3) pour produire un faisceau parallèle de lumière blanche, avec au moins un prisme dichroïque,qui présente deux couches séparatrices de couleur dichroîque (51,52) et qui est pourvu sur trois de ses côtés, de trois valves optiques à cristaux liquides associées à des copies colorées différentes de l'image, et avec un objectif (8), par lequel les copies colorées de l'image produites par les valves optiques peuvent être projetées conjointement sur un écran de projection, caractérisé en ce qu'il est prévu deux cubes séparateurs de couleur dichroïques (21, 22) à action réfléchissante qui sont respectivement couplés à une des sorties, associées à des directions de polarisation différentes, d'un diviseur de faisceau polarisant (10, 60, 80) par lequel, d'une part, le faisceau de lumière blanche (6) peut être divisé sur les deux cubes séparateurs (21, 22) et, d'autre part, la lumière des points d'image activés (41) revenant des cubes séparateurs de couleur (21, 22) peut être dirigée dans l'objectif (8).

2. Dispositif selon la revendication 1, caractérisé en ce que le diviseur de faisceau est un prisme de MacNeille (10).

3. Dispositif selon la revendication 1, caractérisé en ce que les valves optiques (23 à 28) présentent une couche réfléchissante (35) sur le côté opposé au cube séparateur de couleur (21, 22).

4. Dispositif selon la revendication 1, caractérisé en ce que des filtres de couleur sont prévus entre les valves optiques (23 à 28) et les cubes séparateurs de couleur (21, 22).

5. Dispositif selon la revendication 1, caractérisé en ce que les deux cubes séparateurs de couleur (21, 22) sont pivotés de 90° l'un par rapport à l'autre et sont couplés à des côtés du diviseur de faisceau (10, 60, 80) qui sont orientés à 90° l'un de l'autre.

6. Dispositif selon la revendication 1 ou 2, caractérisé en ce que le diviseur de faisceau (60) est disposé dans une cuvette (66) remplie d'un liquide très réfractif (65).

7. Dispositif selon la revendication 1, caractérisé en ce qu'il est prévu, comme diviseur de faisceau, une plaque séparatrice de faisceau (81, 82) qui s'étend le long d'une diagonale dans une cuvette (66), qui est remplie d'un liquide très réfractif (65) et dans laquelle sont prévus, des deux côtés de la plaque séparatrice de faisceau (81, 82), des prismes coniques très réfractifs (83, 84).

8. Dispositif selon la revendication 1, caractérisé en ce que les projections des lignes d'image des six valves optiques (23 à 28) se recouvrent.

9. Dispositif selon la revendication 1, caractérisé en ce que les projections des lignes d'image (37) produites par les valves optiques (23 à 25) associées au premier cube séparateur de couleur (21) se trouvent entre les projections des lignes d'image (37) des valves optiques (26 à 28) associées au second cube séparateur de couleur (22).

10. Dispositif selon la revendication 9, caractérisé en ce que les valves optiques (23 à 25) associées au premier cube séparateur de couleur (21) constituent la première image partielle, et les valves optiques (26 à 28) associées au second cube séparateur de couleur (22) la seconde image partielle, d'une image tridimensionnelle avec des lignes de direction de polarisation différentes.

11. Dispositif selon la revendication 1, caractérisé en ce que les projections des lignes d'image (37) produites par les valves optiques (23 à 25) associées au premier cube séparateur de couleur (21) se trouvent sur les projections des lignes d'image (37) des valves optiques (26 à 28) associées au second cube séparateur de couleur (22).
